# EUROPÄISCHE PATENTSCHRIFT

(11) **EP 1 974 595 B1**
(45) Veröffentlichungstag und Bekanntmachung des Hinweises auf die Patenterteilung: **09.01.2013**
(21) Anmeldenummer: 07006640.2
(22) Anmeldetag: 30.03.2007
(51) Int. Cl.: A01B 33/08, A01B 45/02, A01D 34/74

(54) **Bodenbearbeitungsgerät**
Soil cultivation device
Appareil de traitement des sols

(43) Veröffentlichungstag der Anmeldung: 01.10.2008
(73) Patentinhaber: Viking GmbH, 6336 Langkampfen (AT)
(72) Erfinder: Eulner, Andreas, 6300 Wörgl (AT)
(74) Vertreter: Wasmuth, Rolf

(56) Entgegenhaltungen:
- DE-A1- 10 012 365
- DE-U1- 29 719 002
- GB-A- 1 540 217
- US-A- 4 550 783
- US-A- 5 119 880

## Beschreibung

Die Erfindung betrifft ein Bodenbearbeitungsgerät, insbesondere einen Vertikutierer, nach dem Oberbegriff des Anspruchs 1.

Ein gattungsgemäßes Bodenbearbeitungsgerät ist aus der DE 297 19 002 U1 bekannt. Der beschriebene Vertikutierer ist mit vorderen und hinteren Laufrädern am Boden abgestützt. Innerhalb des zum Boden offenen Gehäuses ist ein Arbeitswerkzeug in Form einer Messerwalze gehäusefest gelagert.

Über eine Höhenverstelleinrichtung ist das Gehäuse des bekannten Vertikutierers in seiner Höhenlage relativ zum Boden einstellbar, wodurch die höhenfest im Gehäuse angeordnete Messerwalze am Boden in Eingriff gebracht wird. Die Höhenverstelleinrichtung umfasst eine Schwinge, an deren einem Ende die hinteren Laufräder und über eine Stellstange die vorderen Laufräder angelenkt sind, während das andere Ende der Schwinge mit dem Zugseil eines Bowdenzuges verbunden ist, der von einer am Führungsholm festgelegten Stellvorrichtung betätigt wird.

Die bekannte Höhenverstelleinrichtung hat den Nachteil, dass mit dem Zugseil relativ große Stellwege zu durchfahren sind, um das Bodenbearbeitungsgerät aus einer Arbeitsstellung in eine Transportstellung zu verstellen. Stellhebel zur Betätigung des Zugseils müssen oft Drehwinkel von 180° und mehr aufweisen.

Aus der DE 100 12 365 A ist ein ähnliches Bodenbearbeitungsgerät bekannt, bei dem das Arbeitswerkzeug mit Gehäuse an einer Schwinge gelagert ist. Nachteilig ist auch hier der Stellweg.

Der Erfindung liegt die Aufgabe zugrunde, ein Bodenbearbeitungsgerät der gattungsgemäßen Art derart weiterzubilden, dass der Stellweg für eine Höhenverstellung aus der Arbeitsstellung in eine Transportstellung verringert ist.

Die Aufgabe wird erfindungsgemäß nach den kennzeichnenden Merkmalen des Anspruchs 1 gelöst.

Die Anordnung des Arbeitswerkzeugs an der Schwinge hat den Vorteil, dass bei einer Höhenverstellung nicht nur das Gehäuse relativ zum Boden höhenverstellt wird, sondern auch das Arbeitswerkzeug in seiner Lage relativ zum Gehäuse eine Höhenänderung erfährt. Dadurch führt eine Stellbewegung der Höhenverstellvorrichtung zu einer Höhenverstellung des Gehäuses selbst und zu einer geänderten Höhenlage des Arbeitswerkzeugs innerhalb des Gehäuses, wodurch ein großer Gesamthub der Arbeitswalze relativ zu der zu bearbeitenden Bodenfläche erzielt ist. Mit der erfindungsgemäßen Anordnung des Arbeits-Arbeitswerkzeugs auf der Schwinge und der Lagerung der Hinterräder an der Schwinge wird vorteilhaft eine Verringerung des notwendigen Stellwegs an einer Höhenverstelleinrichtung erzielt.

Darüber hinaus ist von Vorteil, dass bei der Höhenverstellung des Arbeitsgerätes nicht dessen Gesamtgewicht angehoben werden muss, sondern nur ein Teilgewicht. Da die Achse der Vorderräder gehäusefest angeordnet ist, wird bei der Verstellung des Gehäuses dieses um die Vorderachse verschwenkt, während die Hinterachse auf der Schwinge sitzt und zur Höhenverstellung nur die Kraft aufgewendet werden muss, die notwendig ist, um das Gehäuse an den Hinterrädern anzuheben. Nur ein Teil des Gesamtgewichtes muss zur Höhenverstellung mit einem Transporthebelsystem aufgebracht werden. Durch die Anordnung der Hinterräder auf der gleichen Schwinge wie das Arbeitswerkzeug erreicht man zudem bei einer Zustellung mit einem Seilzug einen signifikant größeren Hub als bei Verstellung in einem Gehäuse mit vier ortsfest angeordneten Rädern.

Zur Höhenverstellung des Bodenbearbeitungsgerätes bewegen sich die mit der Schwinge verbundene Bodenstütze und das Arbeitswerkzeug in gleicher Drehrichtung um die Verschwenkachse der Schwinge. Dadurch kann - bei entsprechender Auslegung der Schwinge - ein Hub erzielt werden, der einem Mehrfachen des Stellwegs der Stellvorrichtung entspricht.

Die Schwinge ist vorteilhaft als L-förmiger Hebel ausgebildet, dessen Arme vorzugsweise in Richtung der Bodenfläche weisen. Die Höhenverstelleinrichtung greift an dem anderen Ende der Schwinge, insbesondere an dessen äußerstem Ende an. Die Schwinge kann auch eine andere zweckmäßige Form haben, wie z.B. als Dreieck oder als gerader Hebel.

Es ist vorteilhaft, wenn eine hintere Bodenstütze des Gehäuses an der Schwinge gehalten ist.

Eine konstruktiv vorteilhafte Gestaltung wird erzielt, wenn die Verschwenkachse höher als der Anlenkpunkt der Bodenstütze und der Anlenkpunkt des Arbeitswerkzeugs liegt; zweckmäßig können die Verschwenkachse und die Anlenkpunkte in Seitenansicht die Ecken eines virtuellen Dreiecks bilden.

Das Arbeitswerkzeug des Bodenbearbeitungsgerätes ist eine Arbeitswalze, insbesondere eine Messerwalze, wie sie bei Vertikutierern in vielfältiger Ausgestaltung eingesetzt ist.

Als Bodenstütze werden vorteilhaft Laufräder vorgesehen; andere Formen von Bodenstützen wie Kufen oder dgl. sind möglich.

Die Höhenverstelleinrichtung wird von einer Stellvorrichtung gesteuert, die aus einem Stellhebel besteht, dessen Stellbewegung mit der Schwinge gekoppelt ist. In Arbeitsstellung des Arbeitswerkzeugs liegt der Stellhebel an einem verstellbaren Anschlag an. Dabei ist der verstellbare Anschlag insbesondere als Drehanschlag mit einer Rastkulisse ausgeführt und dient der Feinjustierung in vorzugsweise sechs Stufen; es kann zweckmäßig sein, die Justierung stufenlos auszuführen. Der Drehanschlag mit Rastkulisse kann zweckmäßig auch als Hebel ausgeführt sein.

Weitere Merkmale der Erfindung ergeben sich aus den weiteren Ansprüchen, der Beschreibung und den Zeichnungen, in der nachfolgend ein im Einzelnen beschriebenes Ausführungsbeispiel der Erfindung dargestellt ist. Es zeigen:
- Fig. 1: in Seitenansicht ein als Vertikutierer ausgebildetes Bodenbearbeitungsgerät in Transportstellung,
- Fig. 2: in Seitenansicht ein Bodenbearbeitungsgerät nach Fig. 1 in einer Arbeitsstellung I,
- Fig. 3: in Seitenansicht ein Arbeitsgerät gemäß Fig. 1 in einer weiteren Arbeitsstellung II,
- Fig. 4: in Seitenansicht ein Bodenbearbeitungsgerät nach Fig. 1 in einer maximalen Arbeitsstellung III,
- Fig. 5: in schematischer Seitenansicht eine Stellvorrichtung für eine Höhenverstelleinrichtung mit in Transportstellung stehendem Stellhebel,
- Fig. 6: eine perspektivische, schematische Ansicht der Stellvorrichtung mit in Arbeitsstellung III stehendem Stellhebel,
- Fig. 7: eine Seitenansicht der Stellvorrichtung nach Fig. 5 mit in Arbeitsstellung I stehendem Stellhebel,
- Fig. 8: in Seitenansicht eine Stellvorrichtung nach Fig. 5 mit in Arbeitsstellung II stehendem Stellhebel,
- Fig. 9: in schematischer Seitenansicht die Stellvorrichtung gemäß Fig. 6.

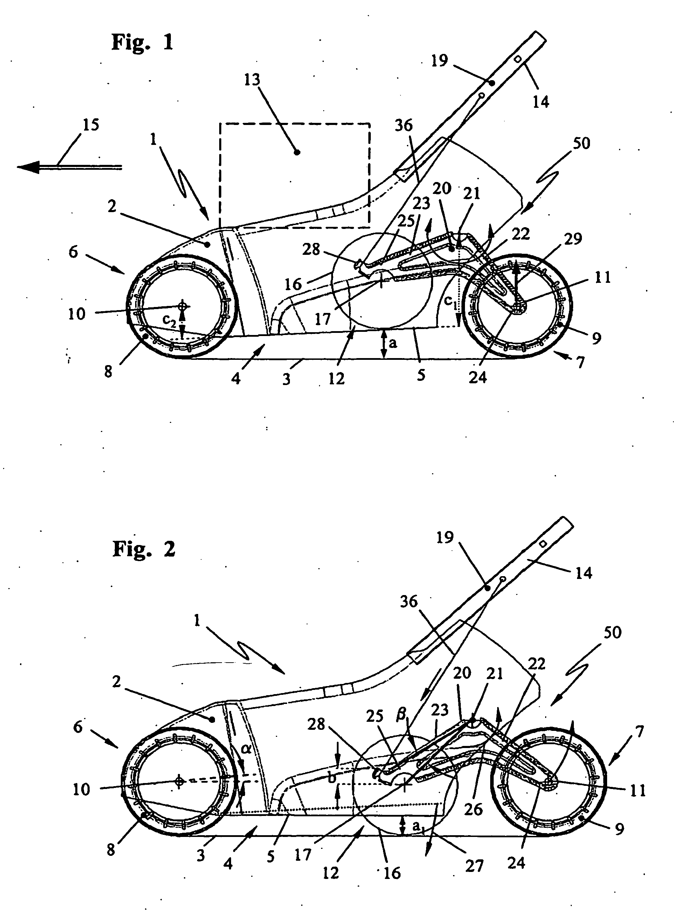

Das in Fig. 1 schematisch dargestellte Bodenbearbeitungsgerät ist als Vertikutierer ausgebildet. Das Bodenbearbeitungsgerät 1 weist ein Gehäuse 2 auf, dessen zur Bodenfläche 3 gewandte Unterseite 4 offen ist. Das Gehäuse 2 weist an seiner Unterseite 4 einen die Gehäuseöffnung begrenzenden Gehäuserand 5 auf.

Das Gehäuse 2 ist über vordere Bodenstützen 6 und hintere Bodenstützen 7 auf der Bodenfläche 3 derart abgestützt, dass der Gehäuserand 5 zur Bodenfläche 3 im Bereich des Arbeitswerkzeugs 12 einen einstellbaren Bodenabstand a aufweist.

Im Ausführungsbeispiel sind die Bodenstützen 6, 7 als Laufräder 8, 9 ausgebildet, wobei vorteilhaft auf jeder Längsseite des Gehäuses 2 zwei Bodenstützen 6, 7 bzw. Laufräder 8, 9 angeordnet sind. Das Gehäuse 2 ist somit vorteilhaft über vier Bodenstützen, zweckmäßig als Laufräder 8, 9 ausgebildet, am Boden abgestützt. Es kann zweckmäßig sein, das Gehäuse 2 insgesamt mit nur drei Bodenstützen zu versehen, die grundsätzlich zum Betrieb des Bodenbearbeitungsgerätes ausreichend sind.

Die vorderen Bodenstützen 6 bzw. Laufräder 8 sind gehäusefest, bzw. höhenfest z. B. über Achsstummel am Gehäuse 2 angeordnet; die vorderen Laufräder 8 haben eine vorzugsweise gemeinsame Drehachse 10. Das hintere Laufrad 9 bzw. die hinteren Laufräder 9 weisen eine vorzugsweise gemeinsame Drehachse 11 auf und sind zweckmäßig über Achsstummel festgelegt. Im Gehäuse 2 ist ein nur schematisch dargestelltes Arbeitswerkzeug 12 angeordnet, welches von einem Antriebsmotor 13 drehend angetrieben ist. Der Antriebsmotor 13 kann auf das Gehäuse 2 montiert sein, wie dies schematisch in Fig. 1 dargestellt ist. Eine Integration im Gehäuse kann zweckmäßig sein.

Als Antriebsmotor kann ein Elektromotor oder auch ein Verbrennungsmotor dienen, insbesondere ein Zweitakt- oder Viertaktmotor.

Am Gehäuse 2 ist ein Führungsholm 14 befestigt, über den das Bodenbearbeitungsgerät über die zu bearbeitende Bodenfläche zu schieben ist. Die im Bereich des Führungsholms 14 liegenden Bodenstützen 7 bzw. Laufräder 9 sind die hinteren Bodenstützen 7 bzw. hinteren Laufräder 9, während die in Schubrichtung 15 vorlaufenden Bodenstützen 6 bzw. Laufräder 8 die vorderen Bodenstützen 6 bzw. vorderen Laufräder 8 sind. Als Bodenstützen können auch Kufen, Rollen, Pirouettenräder oder dgl. verwendet werden.

Innerhalb des Gehäuses 2 liegt das Arbeitswerkzeug 12, welches durch die offene Unterseite 4 auf der zu bearbeitenden Bodenfläche 3 zum Eingriff gelangt. Im gezeigten Ausführungsbeispiel ist das Arbeitswerkzeug eine Arbeitswalze 16, insbesondere eine an sich bekannte Messerwalze, wie sie bei Vertikutierern zum Einsatz kommt.

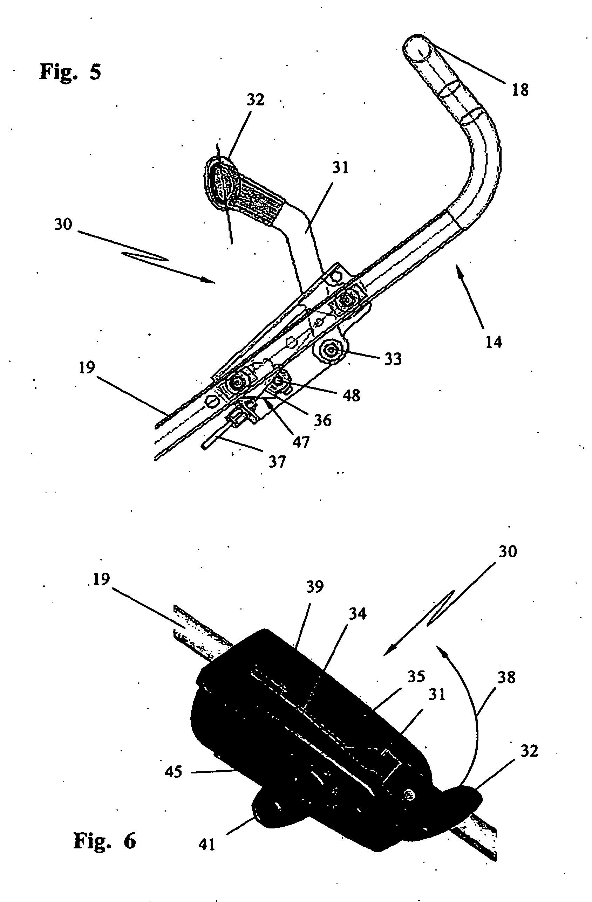

Das Gehäuse 2 ist gegenüber der zu bearbeitenden Bodenfläche 3 um die Vorderachse schwenkbar, so dass sich der Bodenabstand a des Gehäuserandes 5 im Bereich der Arbeitswalze 16 ändern kann. Zum Verschwenken des Gehäuses 2 bei gleichzeitiger Verlagerung der Arbeitswalze 16 innerhalb des Gehäuses 2 ist für die hinteren Laufräder 9 eine Höhenverstelleinrichtung 50 vorgesehen; eine Stellvorrichtung 30 für eine derartige Höhenverstelleinrichtung 50 ist in den Figuren 5 bis 9 dargestellt.

Die Höhenverstelleinrichtung 50 weist eine am Gehäuse 2 gelagerte Schwinge 20 auf, die um eine im Wesentlichen liegende Verschwenkachse 21 bewegbar ist. Die Schwinge 20 ist im Ausführungsbeispiel als L-förmiger Hebel gestaltet, dessen Arme 22 und 23 vorzugsweise in Richtung der Bodenfläche 3 weisen. Auch andere Formen des Hebels können zweckmäßig sein. An dem einen Ende 24 des einen Schwingenarms 22 ist die Bodenstütze 7 bzw. das Laufrad 9 drehbar gehalten, während an dem anderen Ende 25 des anderen Schwingenarms 23 das Arbeitswerkzeug 12 gehalten ist. Im gezeigten Ausführungsbeispiel ist das als Arbeitswalze 16 ausgebildete Arbeitswerkzeug um die liegende Achse 17 drehbar gelagert; die Drehachse 17 liegt etwa parallel zur Bodenfläche 3. Die Laufräder 9 sind um eine virtuelle Achse 11 drehbar.

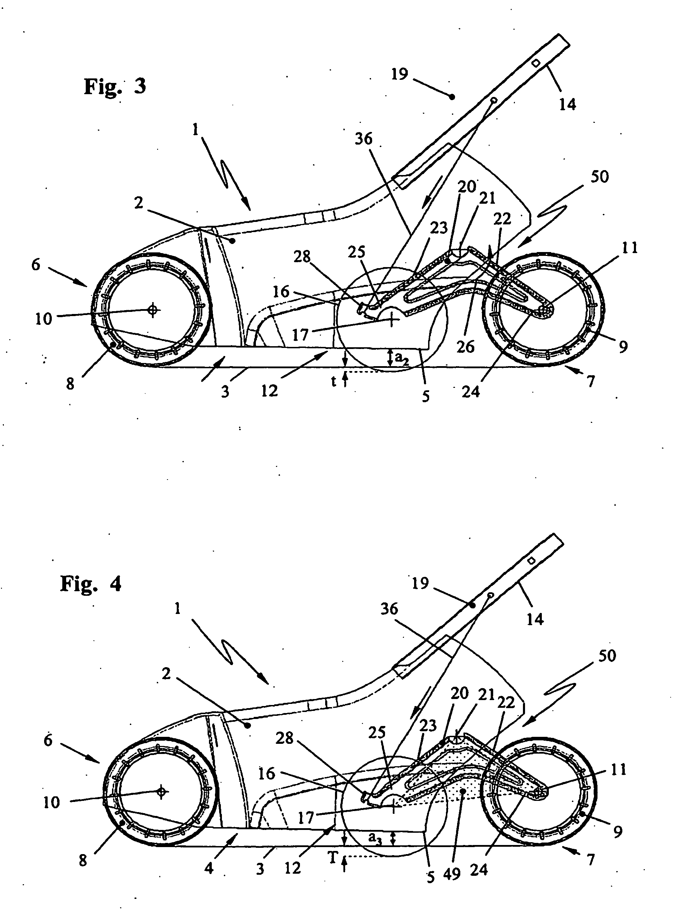

Die Drehachse 17 der Arbeitswalze 16, die Verschwenkachse 21 und die Drehachse 11 des hinteren Laufrades 9 liegen zueinander im Wesentlichen parallel; die Verschwenkachse 21 der Schwinge 20 liegt höher als die Drehachsen 11 und 17. Vorzugsweise liegt die Verschwenkachse 21 höher als die Drehachse.l0 der vorderen Laufräder 8. In Seitenansicht auf das Bodenbearbeitungsgerät gemäß dem Ausführungsbeispiel bilden die Achsen Eckpunkte eines virtuellen, vorzugsweise gleichschenkligen Dreiecks 49 (Fig. 4). Es kann zweckmäßig sein, die wirksame Länge der Schwingenarme 22 und 23 unterschiedlich auszubilden, wodurch sich die Schenkel des gebildeten Dreiecks 49 unterschiedlich ändern können. Die Verschwenkachse 21 der Schwinge 20 liegt mit einem größeren, vorzugsweise mehrfach größeren Abstand c₁ zur Gehäusekante 5 als die vordere Drehachse 10 des gehäusefest vorzugsweise auf einem Achsstummel angeordneten Laufrades 8. Im Ausführungsbeispiel ist c₁ etwa 2,5-fach größer als c₂.

Zur Höhenverstellung wird die Schwinge 20 um die Verschwenkachse 21 bewegt. Abhängig vom Drehwinkel der Schwinge 20 ändert sich der in Höhe der Arbeitswalze 16 gemessene Bodenabstand a des Gehäuserandes 5 zum Boden 3 und die Lage des Arbeitswerkzeugs 12 innerhalb des Gehäuses 2. Zum Absenken der Arbeitswalze 16 wird die Schwinge 20 entgegen dem Uhrzeigersinn bewegt, wodurch sich die Arbeitswalze 16 innerhalb des Gehäuses 2 um einen Betrag b nach unten absenkt. Gleichzeitig bewegen sich die Hinterräder 9 relativ zum Gehäuse 2 nach oben, wodurch das Gehäuse 2 um die Drehachse 10 der Vorderräder 8 nach unten schwenkt. Der Gesamthub der Arbeitswalze 16 ist somit eine zusammengesetzte Bewegung aus dem Betrag b (Verlagerung der Arbeitswalze innerhalb des Gehäuses) und der Verringerung des Bodenabstands a der Gehäusekante 5 zum Boden selbst (Verschwenkung des Gehäuses um die vordere Drehachse der Laufräder).

Um aus der Transportstellung gemäß Fig. 1 in die Arbeitsstellung I gemäß Fig. 2 zu gelangen, wird die Schwinge 20 in Pfeilrichtung 26 (Fig. 2) um den Winkel β verschwenkt. Da durch die Schwenkbewegung in Pfeilrichtung 26 sowohl die Bodenstütze 7 bzw. das Laufrad 9 als auch das Arbeitswerkzeug 12 bzw. die Arbeitswalze 16 sich in gleicher Drehrichtung um die Verschwenkachse 21 bewegen, überlagern sich zwei Stellbewegungen. Einerseits wird sich aufgrund der relativen Verlagerung der hinteren Bodenstütze 7 bzw. des hinteren Laufrades 9 gegenüber dem Gehäuse 2 das Gehäuse 2 in Pfeilrichtung 27 um die vordere Drehachse 10 um den Winkel α verschwenken. Dadurch verlagert sich der Gehäuserand 5 relativ zur Bodenfläche 3, so dass in der Arbeitsstellung I ein Bodenabstand a₁ im Bereich der Arbeitswalze 16 gegeben ist.

Andererseits wird durch die Schwenkbewegung der Schwinge 20 in Pfeilrichtung 26 die Arbeitswalze 16 im Gehäuse 2 eine veränderte Lage einnehmen und sich im Gehäuse 2 um den Betrag b nach unten verlagern. Die Arbeitswalze 16 liegt innerhalb des Gehäuses 2 tiefer als in der Transportstellung gemäß Fig. 1. Dadurch ragt ein Teilumfang der Arbeitswalze 16 aus dem Gehäuse 2 hervor und gelangt in Eingriff mit der zu bearbeitenden Bodenfläche 3.

Die Lagerung des Arbeitswerkzeugs 12 und der Bodenstütze 7 an den Armen einer gemeinsamen Schwinge 20 bewirkt, dass sich der Schwenkwinkel β (Fig. 2) doppelt auf die Arbeitshöhe auswirkt. Einmal durch die Höhenverlagerung des Arbeitswerkzeugs 12 innerhalb des Gehäuses 2 und einmal durch die Lageveränderung der Bodenstütze 7 relativ zum Gehäuse 2.

Wird eine weitere Schwenkbewegung der Schwinge 20 in Pfeilrichtung 26 ausgeführt, verringert sich der Bodenabstand a der Gehäusekante 5 auf den Bodenabstand a₂; gleichzeitig ändert sich die Schwenklage der Arbeitswalze 16 im Gehäuse 2 und verlagert sich in Richtung auf die Bodenfläche 3, wodurch die Arbeitswalze 16 über ihren Umfang stärker den Gehäuserand 5 überragt und mit einer Arbeitstiefe t in die zu bearbeitende Bodenfläche 3 eindringt.

Eine weitere Schwenkbewegung der Schwinge 20 in Pfeilrichtung 26 führt zur maximalen Eingrifftiefe T in die Bodenfläche 3. Durch die Verschwenkung des Laufrades 9 um die Drehachse 21 sinkt der Gehäuserand 5 weiter in Richtung auf die Bodenfläche 3, wodurch sich ein minimaler Bodenabstand a₃ im Bereich der Arbeitswalze 16 zum Boden 3 ergibt. Da aufgrund der Schwenkbewegung in Pfeilrichtung 26 auch die Lage der Arbeitswalze 16 innerhalb des Gehäuses in Richtung auf den Boden 3 verlagert wird, ragt die Arbeitswalze 16 über einen noch größeren Umfangsabschnitt aus dem Gehäuse 2 heraus und greift mit einer maximalen Eingrifftiefe T in den Boden ein.

Die Anordnung sowohl einer Bodenstütze bzw. eines Laufrades als auch des Arbeitswerkzeugs an einer gemeinsamen Schwinge hat zur Folge, dass mit nur geringen Schwenkbewegungen der Schwinge ein großer Hub des Arbeitswerkzeugs gegenüber der zu bearbeitenden Bodenfläche 3 erzielt werden kann. Durch Auslegung der Länge der Schwingenarme 22 und 23 kann die Hubbewegung des Gehäuses 2 und die Hubbewegung des Arbeitswerkzeugs 12 innerhalb des Gehäuses 2 ausgelegt werden. Je nach Einsatzfall kann die Größe der Hubbewegung durch Verlagerung des Gehäuses 2 und/oder durch Verlagerung des Arbeitswerkzeugs 12 erzielt werden. Der Gehamthub ergibt sich immer als Summe aus dem Hub des Gehäuses relativ zur Bodenfläche und des Hubs der Messerwalze relativ zum Gehäuse.

Die Höhenverstelleinrichtung 50 mittels der Schwinge 20 wird von einer Stellvorrichtung 30 gesteuert, wie sie in den Figuren 4 bis 9 wiedergegeben ist. Die Stellvorrichtung 30 ist am Führungsholm 14 im Bereich des Griffabschnittes 18 für die Hand des Benutzers angeordnet. Im Ausführungsbeispiel ist die Stellvorrichtung 30 am Seitenholm 19 des Führungsholms 14 festgelegt.

Die Stellvorrichtung 30 besteht im Wesentlichen aus einem Stellhebel 31, dessen freies Ende einen Griffknauf 32 trägt. Der Stellhebel 31 ist am anderen Ende um eine Achse 33 schwenkbar gehalten und durchragt eine schlitzförmige Kulisse 34 in der Oberseite einer Gehäuseabdeckung 35 (Fig. 6). Zwischen dem Griffknauf 32 und der Drehachse 33 ist im gezeigten Ausführungsbeispiel das Zugseil 36 eines Bowdenzuges 37 befestigt, dessen anderes Ende mit der Schwinge 20 in Verbindung steht. Vorteilhaft verläuft das Zugseil 36 vom Seitenholm 19 unmittelbar zum freien Ende eines Schwingenarms 22 bzw. 23. Im gezeigten Ausführungsbeispiel der Figuren 1 bis 4 ist das Zugseil 36 an einer Nase 28 des Schwingenarms 23 eingehängt, so dass aufgrund der Gewichtskraft des Bodenbearbeitungsgerätes selbst das Zugseil 36 gespannt ist. Da die hintere Bodenstütze 7 bzw. das hintere Laufrad 9 die Gewichtskraft des Bodenbearbeitungsgerätes am Boden abstützt, wirkt am Ende 24 des Schwingenarms 22 permanent eine Kraft 29, die versucht, die Schwinge 20 in Pfeilrichtung 26 zu verstellen. Auch das Gewicht der Arbeitswalze 16 übt eine Gewichtskraft aus, die eine Verstellung der Schwinge 20 in Drehrichtung 26 (Fig. 2) unterstützt.

Die Anbindung des Zugseils 36 an der Nase 28 des Schwingenarms 23 ist derart, dass zwischen der Anbindung des Zugseils 36 am Ende des Schwingenarms 25 und der Drehachse 21 das Arbeitswerkzeug 12 bzw. die Arbeitswalze 16 gelagert ist. Diese Anordnung hält die am Stellhebel 31 einzuleitenden Stellkräfte niedrig.

Zur Einstellung der Transportstellung wird der Stellhebel 31 in Pfeilrichtung 38 nach hinten gezogen (Fig. 6) und seitlich in einen Rastschlitz 39 der Kulisse 34 eingerastet. Diese in Fig. 5 und 6 gezeigte Lage entspricht der Transportstellung des Bodenbearbeitungsgerätes nach Fig. 1.

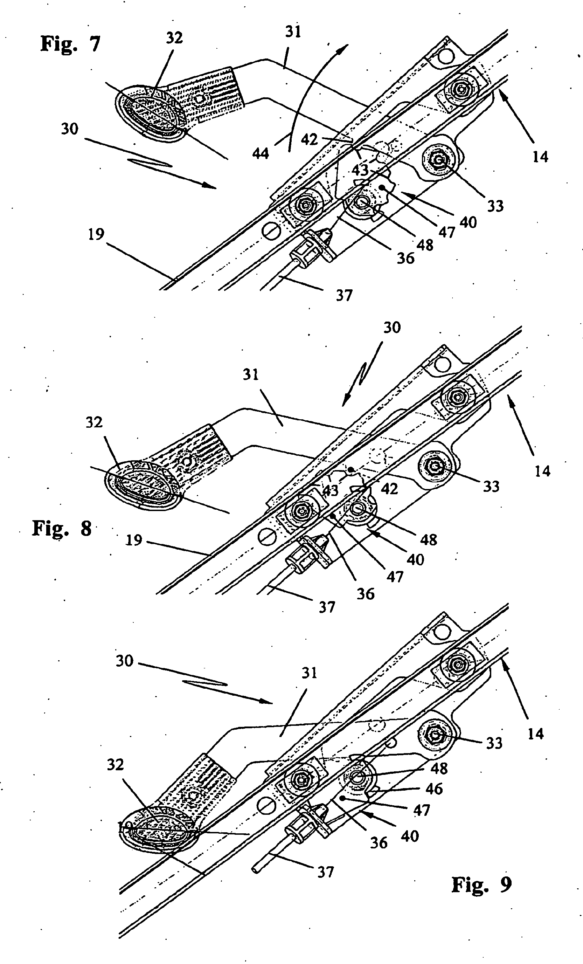

Eine mögliche Arbeitsstellung I - vgl. Fig. 2 - wird dadurch erreicht, dass der Stellhebel 31 aus dem Rastschlitz 39 gelöst und - unter der Gewichtskraft des Bodenbearbeitungsgerätes - im Sinne eines Absenkens des Gehäuses 2 und Eingriffs des Arbeitswerkzeugs 12 nach vorne um die Drehachse 33 verschwenkt wird. Zur Sicherung der Arbeitsstellung I ist ein verstellbarer Anschlag vorgesehen, der vorteilhaft als Drehanschlag 40 ausgebildet ist und über einen Drehknopf 41 (Fig. 6) in seiner Drehlage einstellbar ist. Die Drehachse 48 des Drehanschlags 40 liegt bevorzugt etwa parallel zur Verschwenkachse 33 des Stellhebels 31. In der Darstellung nach Fig. 7 greift der Stellhebel 31 mit einer Anschlagnase 42 in eine Anschlagvertiefung 43 einer Rastplatte 47 des Drehanschlages 40 ein. Dadurch ist die Stelllage des Stellhebels 31 in der Arbeitsposition I gesichert. Aufgrund des Zugs auf das Zugseil 36 liegt der Anschlag 42 des Stellhebels 31 sicher in der Anschlagvertiefung 43 des Drehanschlags 40.

Um die weitere Arbeitsstellung II gemäß Fig. 3 einzunehmen, muss der Stellhebel 31 im Sinne eines Lösens aus der Anschlagvertiefung 43 in Pfeilrichtung 44 nach hinten bewegt und die Drehlage der Rastplatte 47 durch Drehen am Drehknopf 41 entsprechend verstellt werden. Wurde - mittels der Skala 45 - eine gewünschte Arbeitstiefe eingestellt, wird der Stellhebel 31 wieder nach vorne verschwenkt bis die Anschlagnase 42 in die Anschlagvertiefung 43 für die Arbeitsstellung II einrastet.

Eine z. B. maximale Arbeitstiefe wird gemäß Figur 4 erreicht, indem - nach Lösen des Stellhebels 31 vom Drehanschlag 40 - der Drehanschlag derart verstellt wird, dass der Stellhebel bis an das vordere Ende der Kulisse 34 verschwenken kann. Diese Lage entspricht der maximalen Arbeitstiefe T, die somit durch die konstruktive Auslegung bestimmt ist. In dieser Stellung liegt die Rastplatte 47 des Drehanschlags 40 an einem Begrenzungsanschlag 46.

## Patentansprüche

1. Bodenbearbeitungsgerät mit einem Gehäuse (2), das auf seiner einer zu bearbeitenden Bodenfläche (3) zugewandten Unterseite (4) offen ist und über Bodenstützen (7) auf der Bodenfläche (3) abgestützt ist, mit einem im Gehäuse (2) liegenden Arbeitswerkzeug (12), das von einem Motor (13) drehend angetrieben ist, und mit einer Höhenverstelleinrichtung (50), über die das Gehäuse (2) relativ zur Bodenfläche (3) in der Höhe (a) einstellbar ist, wobei die Höhenverstelleinrichtung (50) eine Schwinge (20) aufweist, die um eine im Wesentlichen parallel zur Bodenfläche (3) liegende Verschwenkachse (21) bewegbar und am Gehäuse (2) gelagert ist, wobei das eine Ende (24) der Schwinge (20) eine Bodenstütze (7) trägt und die Schwinge (20) über eine Stellvorrichtung (30) in ihrer Lage verschwenkbar ist,
**dadurch gekennzeichnet, dass** im Bereich des anderen Endes (25) der Schwinge (20) das Arbeitswerkzeug (12) gehalten ist.

2. Bodenbearbeitungsgerät nach Anspruch 1,
**dadurch gekennzeichnet, dass** sich zur Höhenverstellung die Bodenstütze (7) und das Arbeitswerkzeug (12) in gleicher Drehrichtung (26) um die Verschwenkachse (21) bewegen.

3. Bodenbearbeitungsgerät nach Anspruch 1 oder 2,
**dadurch gekennzeichnet, dass** die Schwinge (20) ein L-förmiger Hebel ist, dessen Arme (22, 23) vorzugsweise in Richtung der Bodenfläche (3) weisen.

4. Bodenbearbeitungsgerät nach einem der Ansprüche 1 bis 3,
**dadurch gekennzeichnet, dass** die Höhenverstelleinrichtung (50) an dem anderen Ende (25) der Schwinge (20), insbesondere an dessen äußerstem Ende (28) angreift.

5. Bodenbearbeitungsgerät nach einem der Ansprüche 1 bis 4,
**dadurch gekennzeichnet, dass** eine hintere Bodenstütze (7) des Gehäuses (2) an der Schwinge (20) gehalten ist.

6. Bodenbearbeitungsgerät nach einem der Ansprüche 1 bis 5,
**dadurch gekennzeichnet, dass** die Verschwenkachse (21) der Schwinge (20) höher liegt als der Anlenkpunkt der Bodenstütze (7) und der Anlenkpunkt des Arbeitswerkzeugs (12).

7. Bodenbearbeitungsgerät nach einem der Ansprüche 1 bis 6,
**dadurch gekennzeichnet, dass** die Verschwenkachse (21) der schwinge (20) höher liegt als die Drehachse (10) der vorderen Laufräder (8).

8. Bodenbearbeitungsgerät nach einem der Ansprüche 1 bis 7,
**dadurch gekennzeichnet, dass** das Arbeitswerkzeug (12) eine Arbeitswalze (16), insbesondere eine Messerwalze ist.

9. Bodenbearbeitungsgerät nach einem der Ansprüche 1 bis 8,
**dadurch gekennzeichnet, dass** als Bodenstütze (7) ein Laufrad (9) vorgesehen ist.

10. Bodenbearbeitungsgerät nach Anspruch 9,
**dadurch gekennzeichnet, dass** die Verschwenkachse (21) der Schwinge (20) mit einem größeren Abstand (c) zum Gehäuserand (5) liegt als die Drehachse (10) eines vorderen Laufrades (8).

11. Bodenbearbeitungsgerät nach einem der Ansprüche 1 bis 10,
**dadurch gekennzeichnet, dass** die Stellvorrichtung (30) aus einem Stellhebel (31) besteht, dessen Stellbewegung mit der Schwinge (20) gekoppelt ist, und dass der Stellhebel (31) in Arbeitsstellung des Arbeitswerkzeugs (12) an einem verstellbaren Anschlag (40) anliegt.

12. Bodenbearbeitungsgerät nach Anspruch 11,
**dadurch gekennzeichnet, dass** der verstellbare Anschlag (40) ein Drehanschlag ist und vorzugsweise aus einer um eine Achse (48) drehbaren Rastplatte (47) besteht.

## Claims

1. Soil cultivation device with a housing (2) which is open on its lower side (4) facing a soil surface (3) to be cultivated and rests on the soil surface (3) by means of soil supports (7), with a work tool (12) disposed in the housing (2), said work tool (12) being driven in rotation by a motor (13), and with a height adjusting means (50), via which the housing (2) can be adjusted in height (a) relative to the soil surface (3), wherein the height adjusting means (50) comprises a swing element (20) which can be moved about a pivot axis (21) lying substantially parallel to the soil surface (3) and is mounted on the housing (2), wherein one end (24) of the swing element (20) carries a soil support (7) and the swing element (20) can be pivoted in its position via an adjusting device (30),
**characterised in that** the work tool (12) is held in the region of the other end (25) of the swing element (20).

2. Soil cultivation device according to claim 1,
**characterised in that** the soil support (7) and the work tool (12) move in the same rotation direction (26) about the pivot axis (21) for height adjustment.

3. Soil cultivation device according to claim 1 or 2,
**characterised in that** the swing element (30) is an L-shaped lever, of which the arms (22, 23) preferably point in the direction of the soil surface (3).

4. Soil cultivation device according to one of the claims 1 to 3,
**characterised in that** the height adjustment means (50) engages on the other end (25) of the swing element (20), in particular on the outermost end (28) thereof.

5. Soil cultivation device according to one of the claims 1 to 4,
**characterised in that** a rear soil support (7) of the housing (2) is held on the swing element (20).

6. Soil cultivation device according to one of the claims 1 to 5,
**characterised in that** the pivot axis (21) of the swing element (20) lies higher than the attachment point of the soil support (7) and the attachment point of the work tool (12).

7. Soil cultivation device according to one of the claims 1 to 6,
**characterised in that** the pivot axis (21) of the swing element (20) lies higher than the rotation axis (10) of the front running wheels (8).

8. Soil cultivation device according to one of the claims 1 to 7,
**characterised in that** the work tool (12) is a work roller (16), in particular a knife roller.

9. Soil cultivation device according to one of the claims 1 to 8,
**characterised in that** a running wheel (9) is provided as a soil support (7).

10. Soil cultivation device according to claim 9,
**characterised in that** the pivot axis (21) of the swing element (20) lies at a greater distance (c) from the housing edge (5) than the rotation axis (10) of a front running wheel (8).

11. Soil cultivation device according to one of the claims 1 to 10,
**characterised in that** the adjusting device (30) consists of an adjusting lever (31), of which the adjusting movement is coupled with the swing element (20), and **in that** the adjusting lever (31) lies against an adjustable stop (40) in the work position of the work tool (12).

12. Soil cultivation device according to claim 11,
**characterised in that** the adjustable stop (40) is a rotary stop and preferably consists of an engagement plate (47) which can be rotated about a shaft (48).

## Revendications

1. Appareil pour le travail du sol, avec un carter (2) qui est ouvert sur son côté inférieur (4) tourné vers une surface de sol (3) à travailler et qui est supporté sur ladite surface (3) par l'intermédiaire de supports au sol (7), avec un outil de travail (12) qui se trouve dans le carter (2) et qui est entraîné en rotation par un moteur (13), et avec un dispositif de réglage de hauteur (50) par l'intermédiaire duquel le carter (2) est réglable en hauteur (a) par rapport à la surface de sol (3), étant précisé que le dispositif de réglage de hauteur (50) comporte un balancier (20) qui est mobile sur un axe de pivotement (21) globalement parallèle à la surface de sol (3) et qui est monté sur le carter (2), étant précisé qu'une extrémité (24) du balancier (20) porte un support au sol (7) et que le balancier (20) est apte à pivoter dans sa position par l'intermédiaire d'un dispositif de réglage (30),
**caractérisé en ce que** l'outil de travail (12) est fixé dans la zone de l'autre extrémité (25) du balancier (20).

2. Appareil pour le travail du sol selon la revendication 1,
**caractérisé en ce que** pour le réglage en hauteur, le support au sol (7) et l'outil de travail (12) se déplacent dans le même sens de rotation (26) sur l'axe de pivotement (21).

3. Appareil pour le travail du sol selon la revendication 1 ou 2,
**caractérisé en ce que** le balancier (20) est constitué par un levier en L dont les bras (22, 23) sont dirigés de préférence vers la surface de sol (3).

4. Appareil pour le travail du sol selon l'une des revendications 1 à 3,
**caractérisé en ce que** le dispositif de réglage de hauteur (50) agit sur l'autre extrémité (25) du balancier (20), en particulier tout au bout (28) de celle-ci.

5. Appareil pour le travail du sol selon l'une des revendications 1 à 4,
**caractérisé en ce qu'**un support au sol arrière (7) du carter (2) est fixé au balancier (20).

6. Appareil pour le travail du sol selon l'une des revendications 1 à 5,
**caractérisé en ce que** l'axe de pivotement (21) du balancier (20) se trouve plus haut que le point d'articulation du support au sol (7) et que le point d'articulation de l'outil de travail (12).

7. Appareil pour le travail du sol selon l'une des revendications 1 à 6,
**caractérisé en ce que** l'axe de pivotement (21) du balancier (20) se trouve plus haut que l'axe de rotation (10) des roues avant (8).

8. Appareil pour le travail du sol selon l'une des revendications 1 à 7,
**caractérisé en ce que** l'outil de travail (12) est constitué par un cylindre de travail (16), en particulier un cylindre à lames.

9. Appareil pour le travail du sol selon l'une des revendications 1 à 8,
**caractérisé en ce qu'**il est prévu comme support au sol (7) une roue (9).

10. Appareil pour le travail du sol selon la revendication 9,
**caractérisé en ce que** l'axe de pivotement (21) du balancier (20) est disposé à une plus grande distance (c) du bord de carter (5) que l'axe de rotation (10) d'une roue avant (8).

11. Appareil pour le travail du sol selon l'une des revendications 1 à 10,
**caractérisé en ce que** le dispositif de réglage (30) se compose d'un levier de réglage (31) dont le mouvement de réglage est couplé au balancier (20), et **en ce que** le levier de réglage (31), dans la position de travail de l'outil de travail (12), est appliqué contre une butée réglable (40).

12. Appareil pour le travail du sol selon la revendication 11,
**caractérisé en ce que** la butée réglable (40) est une butée rotative et se compose de préférence d'une plaque d'enclenchement (47) apte à tourner sur un axe (48).
